# EUROPÄISCHE PATENTSCHRIFT

(11) **EP 2 936 012 B1**
(45) Veröffentlichungstag und Bekanntmachung des Hinweises auf die Patenterteilung: **26.04.2017**
(21) Anmeldenummer: 13802993.9
(22) Anmeldetag: 12.12.2013
(51) Int. Cl.: F25D 23/02

(54) **WANDUNG FÜR EIN HAUSHALTSKÄLTEGERÄT MIT EINEM EINSTÜCKIGEN TRÄGERRAHMEN FÜR EINEN ISOLATIONSKÖRPER SOWIE HAUSHALTSKÄLTEGERÄT**
WALL FOR A HOUSEHOLD REFRIGERATION APPLIANCE COMPRISING A SINGLE-PIECE SUPPORT FRAME FOR AN INSULATING BODY AND HOUSEHOLD REFRIGERATION DEVICE
PAROI POUR UN APPAREIL DE FROID MÉNAGER, POURVUE D'UN CADRE DE SUPPORT D'UNE SEULE PIÈCE POUR UN CORPS ISOLANT, ET APPAREIL DE FROID MÉNAGER

(30) Priorität: 18.12.2012 DE 102012223538
(43) Veröffentlichungstag der Anmeldung: 28.10.2015
(73) Patentinhaber: BSH Hausgeräte GmbH, 81739 München (DE)
(72) Erfinder: EHNINGER, Christian, 89537 Giengen an der Brenz (DE); SEELMEIER, Michael, 73572 Heuchlingen (DE); STELZER, Jörg, 89537 Giengen (DE)
(86) Internationale Anmeldenummer: PCT/EP2013/076306
(87) Internationale Veröffentlichungsnummer: WO 2014/095542

(56) Entgegenhaltungen:
- EP-A2- 2 258 994
- WO-A1-2009/043601
- WO-A2-2010/127947
- DE-A1-102011 014 302
- DE-U1-202004 019 865
- DE-U1-202005 002 231
- JP-A- H0 882 474

## Beschreibung

Die Erfindung betrifft eine Wandung für ein Haushaltskältegerät, mit einem thermischen Isolationskörper. Des Weiteren betrifft die Erfindung ein Haushaltskältegerät mit zumindest einer derartigen Wandung.

Bei Haushaltskältegeräten, wie beispielsweise einem Kühlgerät oder einem Gefriergerät oder einem Kühl-Gefrier-Kombigerät wird ein Innenraum, in dem Kältegut in Form von Lebensmitteln, die Speisen und Getränke umfassen, durch Wandungen begrenzt. Dazu kann ein Innenbehälter vorgesehen sein, der frontseitig eine Öffnung aufweist, die durch eine Tür verschließbar ist. Auch die Tür stellt in dem Zusammenhang eine Wandung dar.

Die thermischen Isolationskörper können in unterschiedlicher Ausgestaltung vorgesehen sein. So ist bekannt, dass ein Isolationsschaum vorgesehen ist. Ebenso sind bei neueren Ausgestaltungen Vakuumisolationselemente bekannt. So ist beispielsweise aus der WO 2012/031885 A2 ein Gehäuse für ein Kältegerät bekannt, bei dem ein Isolationskörper durch eine äußere und eine innere Schale begrenzt ist und in einem Zwischenraum zwischen den Schalen eine Isolationsmaterialpackung angeordnet ist. Das Isolationsmaterial kann beispielsweise ein hochporöser Feststoff sein.

Aus der DE 10 2009 002 800 A1 ist ein Haushaltskältegerät und eine wärmeisolierende Wandung dafür bekannt. Bei dieser Ausgestaltung kann der Isolationskörper zwei Schalen bzw. Häute aufweisen, zwischen denen wiederum ein Hohlraum ausgebildet ist, der evakuiert sein kann. Bei einer Ausführung kann vorgesehen sein, dass eine Haut dieses Isolationskörpers selbst einen eckigen Rahmen aufweist, an dem dann eine plattenartige Innenhaut und eine Außenhaut befestigt sind, so dass dadurch eine Gesamthülle für den Isolationskörper gebildet ist.

Darüber hinaus beschreibt die DE 20 2004 019 865 U1 ein Kühl- und/oder Gefriergerät mit einer Glastür, die einen Metallrahmen aufweist, in den eine Verglasung eingesetzt ist.

Ferner ist es vorgesehen, dass der Metallrahmen aus einem umlaufend integraleinstückigen Metallmantel besteht.

Ferner beschreibt die EP 2 258 994 A2 ein Haushaltskältegerät, welches einen Korpus mit einem Innenbehälter aufweist, der wenigstens einen Kühlraum begrenzt und mit einem Türblatt zum Begrenzen des Kühlraums. Dabei ist es vorgesehen, dass das Türblatt mindestens eine vertikal ausgerichtete Versteifungsschiene aufweiset und die mindestens eine Versteifungsschiene in einem umgebogenen seitlichen Randabschnitt der Außenwand oder der Innenwand eingesetzt ist.

Schließlich beschreibt die DE 10 2011 014 302 A1 ein Türelement für ein Kühl- und/oder Gefriergerät. Das Türelement weist wenigstens ein Außentürelement und wenigstens ein Vakuumisolationspaneelelement auf, mit dem das Türelement zumindest teilweise dimmbar ist. Ferner weist das Türelement ein Rahmenelement auf, wobei das Vakuumisolationspaneelelement zwischen dem Außentürelement und dem Rahmenelement angeordnet ist.

Bei derartigen plattenartigen Isolationskörpern ist die Positionierung und Befestigung schwierig. In dem Zusammenhang kann ein vollflächiges Ankleben beispielsweise an einem Innenbehälter oder aber auch an einer Innenseite des Außenbehälters vorgesehen sein. Beispielsweise kann der Außenbehälter dann eine äußere Gehäusewand bilden, die den Innenbehälter umgibt. Der Zwischenraum zwischen dem Innenbehälter und dem Außenbehälter kann zusätzlich dann noch mit einem thermisch isolierenden Schaummaterial ausgefüllt sein.

Gerade bei einer Tür ist ein derartiger Aufbau jedoch montageintensiv und die Tür durch die Vielzahl der Komponenten auch relativ dick gestaltet. Dadurch wird entweder das Gerät vergrößert oder ein Nutzvolumen des Innenraums verkleinert.

Es ist Aufgabe der vorliegenden Erfindung, eine Wandung für ein Haushaltskältegerät sowie ein derartiges Haushaltskältegerät zu schaffen, welche bzw. welches eine vereinfachte und dennoch genaue Positionierung und Halterung eines thermischen Isolationskörpers ermöglicht.

Diese Aufgabe wird durch eine Wandung und ein Haushaltskältegerät gemäß den unabhängigen Ansprüchen gelöst.

Eine erfindungsgemäße Wandung für ein Haushaltskältegerät umfasst einen thermischen Isolationskörper. Dieser Isolationskörper ist von einem Trägerrahmen, der Bestandteil der Wandung ist, gehalten. Der Isolationskörper ist durch diesen Trägerrahmen auch umfangsseitig umgeben, wobei der Trägerrahmen darüber hinaus auch einstückig ausgebildet ist. Eine derartige Ausgestaltung ermöglicht einen vereinfachten Aufbau und eine einfachere Montage. Durch einen derartigen Trägerrahmen kann der Isolationskörper sehr positionsgenau und zuverlässig gehalten werden. Durch die einstückige Ausgestaltung ist der Trägerrahmen auch sehr bauteilminimiert gestaltet. Ferner ist durch eine derartige Ausführung auch eine hohe mechanische Stabilität des Rahmens erreicht. Darüber hinaus ist ein Montageaufwand minimiert.

Zudem weist der Trägerrahmen innenseitig zumindest bereichsweise eine Fachwerkstruktur auf. Durch eine derartige Ausgestaltung wird die mechanische Stabilität besonders erhöht, und andererseits jedoch dennoch ein relativ leichtes Bauteil geschaffen. Die zur Fachwerkkonstruktion bzw. zur Fachwerkstruktur beitragenden Elemente sind beispielsweise wabenartig oder rautenartig oder karoartig ausgebildet.

Ferner ist diese Fachwerkstruktur um Eckbereiche des Trägerrahmens hinweg innenliegend und unterbrechungsfrei ausgebildet. Gerade an diesen Übergängen im Eckbereich ist somit eine besonders hohe mechanische Stabilität erreicht, so dass gerade bei einem eckigen, insbesondere rechteckigen Trägerrahmen auch die Verwindungssteifigkeit besonders groß ist.

Vorzugsweise ist vorgesehen, dass der Trägerrahmen rechteckig ausgebildet ist. Insbesondere ist die Geometrie dieses Trägerrahmens an die Formgebung des Isolationskörpers angepasst. Dadurch kann die positionssichere Halterung in mehreren Raumrichtungen zuverlässig ermöglicht werden. Insbesondere ist vorgesehen, dass der Trägerrahmen umfangsseitig auch jeweils über die gesamte Länge am Isolationskörper, insbesondere an dessen Umfangsrand, anliegt.

Vorteilhaft ist es, wenn der Trägerrahmen aus Kunststoff ausgebildet ist. Eine derartige Ausgestaltung ermöglicht eine einfache Herstellung und aufgrund materiellen Ausgestaltungen des Kunststoffs auch eine sehr gewichtsminimierte Ausführung.

Insbesondere ist der Trägerrahmen als ein Spritzgussteil ausgebildet. Die oben genannten Vorteile werden dadurch begünstigt und darüber hinaus können bei dieser Ausgestaltung auch komplexere Geometrien des Trägerrahmens ausgebildet werden.

Vorzugsweise ist vorgesehen, dass der Trägerrahmen aus zumindest zwei unterschiedlichen Kunststoffmaterialien ausgebildet ist. Beispielsweise kann hier ein sogenanntes 2K-Bauteil realisiert sein. Es lassen sich dadurch sowohl funktionelle als auch geometrisch individuelle Trägerrahmenkonstruktionen realisieren. Insbesondere Hinterschneidungen oder mit unterschiedlichen anderen Komponenten in Kontakt stehende Teilbereiche des Trägerrahmens lassen sich so sehr bedarfsangepasst realisieren, so dass den jeweiligen Anforderungen bestmöglich Rechnung getragen werden kann.

Vorzugsweise ist vorgesehen, dass an dem Trägerrahmen zumindest ein weiteres Funktionsbauteil angeordnet ist. Durch eine derartige Ausgestaltung wird der Trägerrahmen multifunktionell gestaltet. Er dient somit nicht nur zum Halten und Aufnahmen des Isolationskörpers, sondern diesbezüglich auch für ein zumindest weiteres separates Bauteil. Dadurch wird ebenfalls eine Bauteilreduzierung der Wandung erreicht, da für dieses Funktionsbauteil kein weiterer separater Halter oder dergleichen benötigt ist.

Gerade aufgrund der einstückigen Ausgestaltung kann eine Mehrzahl derartiger unterschiedlicher Bauteile aufgenommen werden und die mechanische Stabilität beibehalten werden.

Vorzugsweise ist vorgesehen, dass ein Funktionsbauteil beispielsweise ein Scharnier und/oder eine Lagereinheit und/oder ein Versteifungsteil ist.

Der Trägerrahmen dient somit auch als Anbindung für Scharniere, beispielsweise durch ein Anschrauben. Es kann somit auch eine Integration von Türlagereinheiten für eine Schleppscharnierausgestaltung ermöglicht werden. Ebenfalls kann die Integration von Befestigungsmöglichkeiten für andere Gegenstände, beispielsweise eine Frontplatte oder eine Möbelplatte, ermöglicht sein. Durch ein Versteifungselement wird die Verwindungs- und Biegesteifigkeit nochmals verbessert. Darüber hinaus wird durch den umfangsseitig vollständig geschlossenen umlaufenden Trägerrahmen auch ein gewisser Schutz für den Isolationskörper erreicht. Der Trägerrahmen fungiert somit auch als Schutzelement für den Isolationskörper.

Durch den Trägerrahmen und dessen Ausgestaltung und Positionierung zum Isolationskörper wird auch eine Verringerung des Wärmedurchgangs in diesen Umfangsrand des Isolationskörpers erreicht.

Darüber hinaus wird durch diesen Trägerrahmen eine gewisse Dichtfunktionalität innerhalb des Wandungsverbunds erreicht, um den Austausch von warmer Luft, beispielsweise zwischen einem Kühlfach und einem Gefrierfach eines Haushaltskältegeräts und der Umgebung, zu reduzieren.

Vorzugsweise ist auch vorgesehen, dass an dem Trägerrahmen zumindest eine Dichtung angeordnet ist, mittels welcher die Wandung, wenn sie als Tür zum Verschließen des Innenraums ausgebildet ist, an einem Flansch des Gehäuses anliegen kann. Dadurch wird eine Abdichtung der Tür zum Gehäuse erreicht. Nicht zuletzt stellt ein derartiger Trägerrahmen auch ein Verbindungselement zwischen einer Außentür und/oder einer Innentür und/oder dem Isolationskörper dar. Da Haushaltskältegeräte unterschiedlichst ausgebildet sein können und beispielsweise ein Gefrierfach in einem Kühlfach innenliegend ausgebildet sein kann, welches dann durch eine eigene Gefrierfach-Tür verschließbar ist, können auch hier entsprechende Vorteile mit einem derartigen Trägerrahmen erreicht werden.

Insbesondere ist vorgesehen, dass der Trägerrahmen Trägerrahmenteile aufweist, durch deren Anordnung zueinander die Geometrie, insbesondere eine eckige Geometrie, begrenzt und gebildet ist. So ist beispielsweise bei einem viereckigen Rahmen vorgesehen, dass dieser Trägerrahmen vier Trägerrahmenteile aufweist, die einstückig miteinander verbunden und ausgebildet sind. Jedes der Trägerrahmenteile stellt in dem Zusammenhang eine Seite der viereckigen Geometrie dar. In zumindest einem derartigen Trägerrahmenteil kann ein Versteifungselement, insbesondere ein metallisches Versteifungselement, integriert sein, insbesondere innenliegend integriert sein. Die mechanische Stabilität und somit auch die Belastbarkeit des Trägerrahmens sind dadurch erhöht. Durch eine innenliegende Ausgestaltung vorzugsweise eines metallischen Versteifungselements ist dies somit quasi auch verdeckt und eingebettet, vorzugsweise vollständig von dem Material des Trägerrahmenteils umgeben und umschlossen. Umgebungsbedingungen, wie beispielsweise eine hohe Feuchte und/oder hohe Temperaturschwankungen bzw. kalte Temperaturwerte beeinträchtigen somit die Funktionalität und die Lebensdauer dieses Versteifungselements nicht.

Betreffend die über die Eckbereiche innenliegend hinweg und unterbrechungsfrei ausgebildete Fachwerkstruktur wird derartiges verstanden, dass die Musterung des Fachwerks sich an diesen Übergängen im Eckbereich im Vergleich zu Zonen fern des Eckbereichs nicht ändert und somit quasi gleichmäßig fortgesetzt ist.

Vorzugsweise ist vorgesehen, dass zumindest ein horizontal orientiertes Trägerrahmenteil an gegenüberliegenden Enden jeweils einen Eckbereich aufweist und die Fachwerkstruktur in diesem horizontalen Trägerrahmenteil über den Eckbereich hinweg ausgebildet ist. Das horizontale Trägerrahmenteil weist in Richtung zu vertikalen Trägerrahmenteilen hin eine horizontale Fachwerkabschlusswand auf, an welche eine Fachwerkstruktur des vertikalen Trägerrahmenteils mündet. Die oben genannten Vorteile werden dadurch nochmals begünstigt. An dieser Fachwerkabschlusswand ist somit im Unterschied um oben Erläuterten die Fachwerkstruktur quasi unterbrochen. Aufgrund der Position und Orientierung dieser Fachwerkabschlusswand wird jedoch durch eine weitere Anbindung des weiteren Trägerrahmenteils und die mechanische Stabilität an dieser Stelle im Weiteren für das vertikale Trägerrahmenteil erhöht.

Vorzugsweise ist vorgesehen, dass auf einer Rahmenseite des Trägerrahmens eine umlaufende Nut ausgebildet ist, in welcher eine Dichtung einsetzbar ist. Unter der Rahmenseite wird in dem Zusammenhang eine derartige Oberfläche verstanden, die quasi eine Vorderseite oder eine Rückseite des Trägerrahmens darstellt und somit insbesondere sich quasi in einer Ebene erstreckt, in der auch der Trägerrahmen sich erstreckt.

Diese Rahmenseite ist insbesondere flächenmäßig größer als eine an die Rahmenseite anschließende Ausgestaltung eines Umfangsrands, wobei hier ein äußerer Umfangsrand und ein innerer Umfangsrand anschließen.

Vorzugsweise ist die Dichtung ebenfalls vollständig umlaufend und somit umlaufend geschlossen ausgebildet. Auch hier ist der Trägerrahmen somit in seiner Multifunktionalität der Trägerfunktion bekräftigt.

Besonders vorteilhaft ist es, wenn der thermische Isolationskörper ein Vakuumisolationskörper ist. Da gerade derartige Ausgestaltungen insbesondere als plattenartige Komponenten zur Verfügung gestellt sind, ist, wie bereits eingangs geschildert, deren Befestigung und Halterung von besonderer Bedeutung.

Besonders vorteilhaft ist somit die Kombination eines derartigen Trägerrahmens mit einem Vakuumisolationskörper, wenn die Wandung ansonsten ohne weiteres thermisch isolierendes Schaummaterial ausgebildet ist. Vorzugsweise ist somit die Wandung dann ohne thermisch isolierendes Schaummaterial ausgebildet, und stellt somit eine Vollvakuumwandung dar.

Der Vakuumisolationskörper ist insbesondere durch eine Innenhaut bzw. Innenschale und einer Außenhaut bzw. einer Außenschale gebildet, wobei in einem Zwischenraum zwischen der Innenschale und der Außenschale ein Füllmaterial bzw. ein Stützkörper enthalten ist. Dieses Füllmaterial kann beispielweise Kieselsäure umfassen bzw. ist Kieselsäure. Es können jedoch auch andere bekannte Isolationsmaterialien als Füllmaterial vorgesehen sein. So können auch hochporöse Festkörper eingesetzt sein.

Besonders vorteilhaft ist es, wenn die Wandung eine Tür für das Haushaltskältegerät ist. Gerade bei einer Tür kann in Verbindung mit dem Trägerrahmen und einem dann vorzugsweise als Vakuumisolationskörper ausgebildeten thermischen Isolationskörper ein im Hinblick auf die thermische Isolationswirkung hochfunktionelles Bauteil geschaffen werden, welches mit deutlich reduziertem Montageaufwand hergestellt werden kann und dennoch eine zuverlässige und dauerhaft stabile Positionsanbringung und Halterung des Vakuumisolationskörpers ermöglicht. Gerade dann, wenn die Tür ohne weiteres thermisch isolierendes Schaummaterial ausgebildet ist, und somit eine Vollvakuumtür ist, reicht die Positionshalterung mit dem Trägerrahmen bereits aus, wodurch sich auch eine Gewichtsreduzierung und kompaktere Bauform der Tür realisieren lässt.

In vorteilhafter Weise ist vorgesehen, dass an dem Trägerrahmen auch eine Dichtung angeordnet ist. Vorzugsweise ist die Dichtung auf einer dem Isolationskörper zugewandten Randseite bzw. einem Umfangsrand des Trägerrahmens angeordnet. Insbesondere ist diese Dichtung an einem inneren Umfangsrand angeordnet.

In besonders vorteilhafter Weise umfasst die Erfindung einen Trägerrahmen für einen thermischen Isolationskörper einer Wandung eines Haushaltskältegeräts, welche eckig und als umlaufend geschlossen ausgebildet ist. An zumindest einem zur Bildung der eckigen Geometrie beitragenden Trägerrahmenteil ist ein Innenrand bzw. ein innerer Umfangsrand ausgebildet, der einem gegenüberliegenden anderen Trägerrahmenteil zugewandt ist und an dem zumindest eine Dichtung mit zumindest einer Dichtlippe angeordnet ist.

Die Multifunktionalität dieses Trägerrahmens ist dadurch erreicht.

Vorzugsweise ist vorgesehen, dass eine erste Dichtlippe der Dichtung im Querschnitt des Trägerrahmens betrachtet schräg orientiert angeordnet ist. Dadurch lässt sich erreichen, dass sich bei der Montage des Isolationskörpers am Trägerrahmen keine unerwünschten Verformungen und insbesondere unerwünschte Endlagen der Dichtlippe am Isolationskörper ergeben. Darüber hinaus kann durch eine derartige Orientierung dieser ersten Dichtlippe auch eine sehr satt anliegende und möglichst großflächige Anlage der Dichtlippe am Isolationskörper erreicht werden.

Vorzugsweise ist vorgesehen, dass eine zweite Dichtlippe im Querschnitt des Trägerrahmens betrachtet schräg orientiert angeordnet ist. Die oben genannten Vorteile gelten hier analog und werden insbesondere in Kombination mit dieser spezifischen Orientierung der ersten Dichtlippe bekräftigt.

Vorzugsweise ist vorgesehen, dass zumindest eine Dichtlippe frei kragend und hohlraumfrei ausgebildet ist. Im Querschnitt bildet sich dadurch eine relativ dünne Ausgestaltung einer Dichtlippe, die im Hinblick auf die Anlage an dem Isolationskörper daher relativ flexibel ist und sehr genau positionierbar ist. Nicht zuletzt lässt sich dadurch auch die grundsätzliche Anlage der Dichtlippe an dem Isolationskörper verbessern. Durch die hohlraumfreie Ausgestaltung wird andererseits jedoch eine massivere Dichtung geschaffen, die ein unerwünschtes Verformen in sich selbst, das bei vorhandenen Hohlräumen auftreten kann, vermeidet.

Vorzugsweise ist vorgesehen, dass die erste Dichtlippe zur zweiten Dichtlippe beabstandet angeordnet ist und in die gleiche Richtung wie die zweite Lippe schräg orientiert ist. Die oben genannten Vorteile werden dadurch nochmals begünstigt.

Vorzugsweise ist vorgesehen, dass die Dichtung im Querschnitt betrachtet U-förmig ausgebildet ist. Dadurch ist eine im Querschnitt zum Isolationskörper hin offene Dichtung gebildet, wodurch die oben genannten Vorteile besonders hervortreten.

Vorzugsweise ist vorgesehen, dass die Dichtung zerstörungsfrei unlösbar an dem Innenrand angeordnet ist. Eine unerwünschte Positionsveränderung zwischen der Dichtung und dem Trägerrahmen ist dadurch verhindert.

Beispielsweise kann vorgesehen sein, dass die Dichtung durch ein Anspritzen oder durch Koextrusion oder durch Ankleben zerstörungsfrei unlösbar an dem Innenrand angeordnet ist. Beim Anspritzen kann beispielsweise ein 2K-Spritzguss ausgebildet sein.

Es kann jedoch auch vorgesehen sein, dass die Dichtung zerstörungsfrei lösbar an dem Innenrand angebracht ist, insbesondere eingesteckt oder eingerastet ist. Eine derartige Ausgestaltung weist den Vorteil auf, dass zum Austausch nicht das gesamte Bauteil umfassend den Trägerrahmen und die Dichtung ausgetauscht werden muss, sondern lediglich die Dichtung selbst alleine ersetzt werden kann.

Vorzugsweise ist vorgesehen, dass die Dichtung vollständig umlaufend und somit vollständig geschlossen an dem Innenrand des Trägerrahmens ausgebildet ist. Eine bestmögliche Dichtwirkung ist dadurch erreicht.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltskältegeräts;
- Fig. 2: eine perspektivische Ansicht von hinten einer als Tür ausgebildeten Wandung des Haushaltskältegeräts gemäß Fig. 1;
- Fig. 3: eine Explosionsdarstellung des Ausführungsbeispiels der Tür gemäß Fig. 2;
- Fig. 4: eine perspektivische Darstellung eines Ausführungsbeispiels eines erfindungsgemäßen Trägerrahmens für einen thermischen Isolationskörper von einer ersten Seite aus betrachtet;
- Fig. 5: eine vergrößerte Darstellung eines Ausschnitts der Darstellung in Fig. 4;
- Fig. 6: eine perspektivische Darstellung des Rahmens gemäß Fig. 4 von der gegenüberliegenden Seiten betrachtet; und
- Fig. 7: eine Teildarstellung der Tür gemäß Fig. 2 in einer Schnittansicht.

In den Figuren werden gleiche oder funktionsgleiche Elemente mit den gleichen Bezugszeichen versehen.

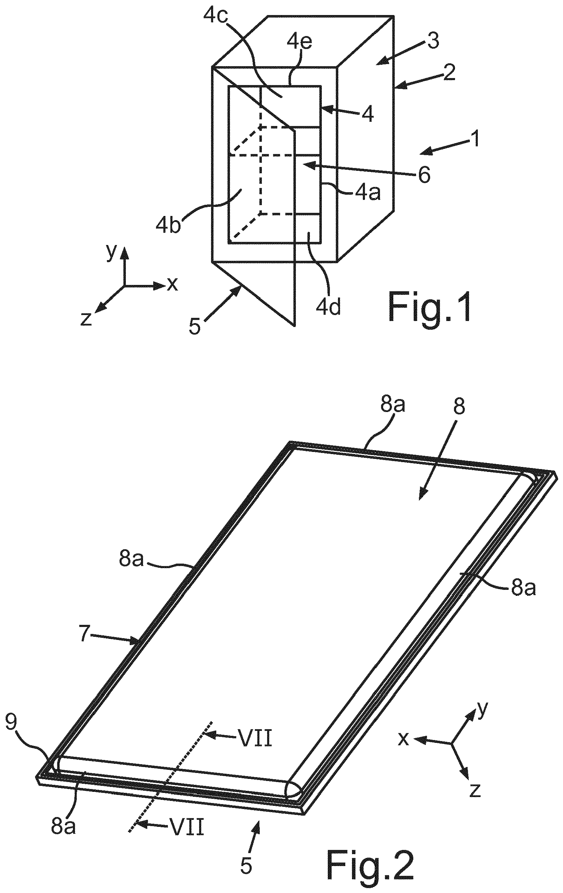

In Fig. 1 ist in einer perspektivischen Darstellung ein Haushaltskältegerät 1 gezeigt, welches zur Aufnahme von Lebensmitteln, wie beispielsweise Getränken und Speisen, ausgebildet ist. Das Haushaltskältegerät 1 kann beispielsweise ein Kühlgerät oder ein Gefriergerät oder ein Kühl-Gefrier-Kombigerät sein.

Das Haushaltskältegerät 1 umfasst ein Gehäuse 2, welches ein Außengehäuse bzw. einem Außenbehälter 3 und ein darin angeordnetes Innengehäuse umfasst, welches ein Innenbehälter 4 ist. Der Außenbehälter 3 umgibt den Innenbehälter 4, wobei beide frontseitig eine Beschickungsöffnung aufweisen, die durch eine Tür 5 verschließbar ist. Der Innenbehälter 4 begrenzt mit seitlichen Wänden bzw. seitlichen Wandungen 4a und 4b sowie einer Rückwand bzw. einer hinteren Wandung 4c, sowie einer Bodenwandung 4d und einer Deckenwandung 4e einen Innenraum 6. Abhängig davon, wie das Haushaltskältegerät 1 ausgebildet ist, kann dieser Innenraum vollständig ein Kühlfach sein oder ein No-Frost-Fach umfassen, oder ein Gefrierfach sein. Es kann auch vorgesehen sein, dass das Haushaltskältegerät 1 als Innenraum 6 ein Kühlfach aufweist, in dem innenliegend ein Gefrierfach integriert ist, welches insbesondere dann durch eine weitere eigene Gefrierfach-Tür verschließbar ist.

Im Ausführungsbeispiel ist vorgesehen, dass die Tür 5 zum Verschließen des Innenraums 6 eine Vakuumisolationstür, insbesondere eine Vollvakuumtür, ist. Dazu ist vorgesehen, dass die Tür 5 zumindest ein Vakuumisolationselement, welches einen thermischen Isolationskörper darstellt, aufweist. Die Tür 5 stellt darüber hinaus ebenfalls eine Wandung des Haushaltskältegeräts 1 dar.

In Fig. 2 ist in einer perspektivischen Ansicht auch eine Innenseite 7 der Tür 5 mit dem Vakuumisolationselement 8 dargestellt. Die Tür 5 umfasst neben dem plattenartigen rechteckigen Vakuumisolationselement 8 einen Trägerrahmen 9. Der Trägerrahmen 9 umgreift umfangsseitig das Vakuumisolationselement 8 vollständig. Das Vakuumisolationselement 8 ist somit von dem Trägerrahmen 9 gehalten.

Der Trägerrahmen 9 ist ebenfalls rechteckig gestaltet und einstückig ausgebildet.

Der Trägerrahmen 9 ist darüber hinaus aus Kunststoff ausgebildet und insbesondere als Spritzgussteil realisiert. Es kann vorgesehen sein, dass der Trägerrahmen 9 aus einem einzigen Kunststoffmaterial oder aus zumindest zwei unterschiedlichen Kunststoffmaterialien ausgebildet ist.

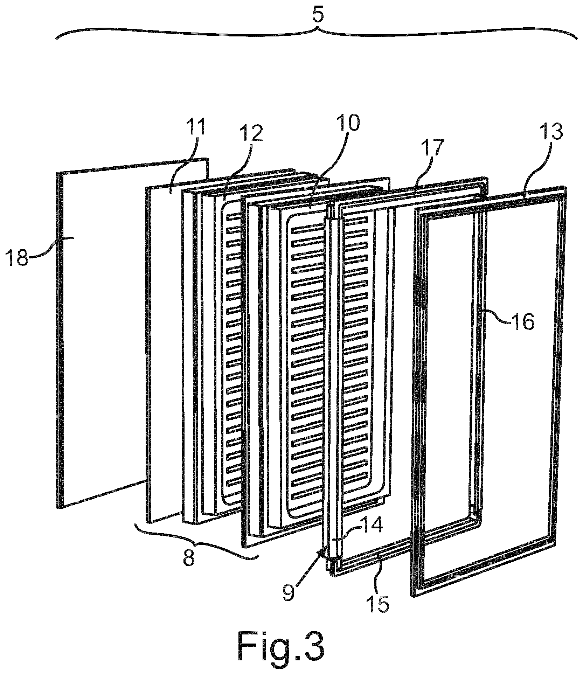

In Fig. 3 ist in einer Explosionsdarstellung die Tür 5 gezeigt.

Es ist dabei zu erkennen, dass das Vakuumisolationselement 8 eine hintere bzw. Innenschale 10 aufweist, die einstückig aus Kunststoff ausgebildet ist. Darüber hinaus umfasst das Vakuumisolationselement 8 eine vordere Schale bzw. eine Außenschale 11, welche ebenfalls einstückig aus Kunststoff ausgebildet ist. Im zusammengesetzten Zustand des Vakuumisolationselements 8 sind die beiden Schalen 10 und 11 miteinander verbunden. Beispielsweise kann hier ein Verkleben oder Verschweißen vorgesehen sein. In dem zwischen den Schalen 10 und 11 gebildeten Zwischenraum bzw. Hohlraum ist ein Füllkörper bzw. Stützkörper 12 eingebracht. Beispielsweise kann hier ein poröser Festkörper vorgesehen sein. In bevorzugter Weise ist Kieselsäure als Füllmaterial vorgesehen. Dieser Zwischenraum zwischen den Schalen 10 und 11 ist evakuiert.

Darüber hinaus ist in Fig. 3 eine umlaufende Dichtung 13 gezeigt, die im zusammengesetzten Zustand an dem Trägerrahmen 9 angeordnet ist. Der Trägerrahmen 9 ist somit multifunktionell gestaltet und zur Aufnahme mehrerer unterschiedlicher separater gegenständlicher Komponenten vorgesehen. Neben der Dichtung 13 kann darüber hinaus jedoch auch noch ein anderes Funktionsbauteil zusätzlich an dem Trägerrahmen 9 angeordnet sein. Beispielsweise können hier ein Scharnier und/oder eine Lagereinheit und/oder ein Versteifungsteil vorgesehen sein.

Im Ausführungsbeispiel umfasst der einstückig ausgebildete Trägerrahmen 9 durch seine rechteckige Formgebung vier Trägerrahmenteile 14, 15, 16 und 17. Die beiden Trägerrahmenteile 14 und 16, welche geradlinige längliche Bauteile sind, erstrecken sich vertikal und parallel. Ebenso erstrecken sich die horizontal angeordneten Trägerrahmenteile 15 und 17 parallel zueinander. Die einstückige Ausgestaltung des Trägerrahmens 9 ist insbesondere durch die während eines einzigen Herstellungsprozesses ausgebildete Form gestaltet. Es werden somit insbesondere keine Ausgestaltungen unter einer Einstückigkeit verstanden, die zunächst das Herstellen separater Trägerrahmenteile umfasst, die dann nachfolgend beispielsweise miteinander verklebt werden oder dergleichen.

Die Tür 5 umfasst darüber hinaus eine außenseitige bzw. frontseitige Abdeckung 18, die beispielweise ein plattenartiges Außenblech ist.

In zumindest einem der Trägerrahmenteile 14 bis 17 kann auch integriert und somit innenliegend ein metallisches Versteifungsteil eingebettet sein. Insbesondere ist diese Integration derart, dass das metallische Versteifungsteil vollständig von dem Kunststoffmaterial des Trägerrahmenteils 14 bis 17 umschlossen ist.

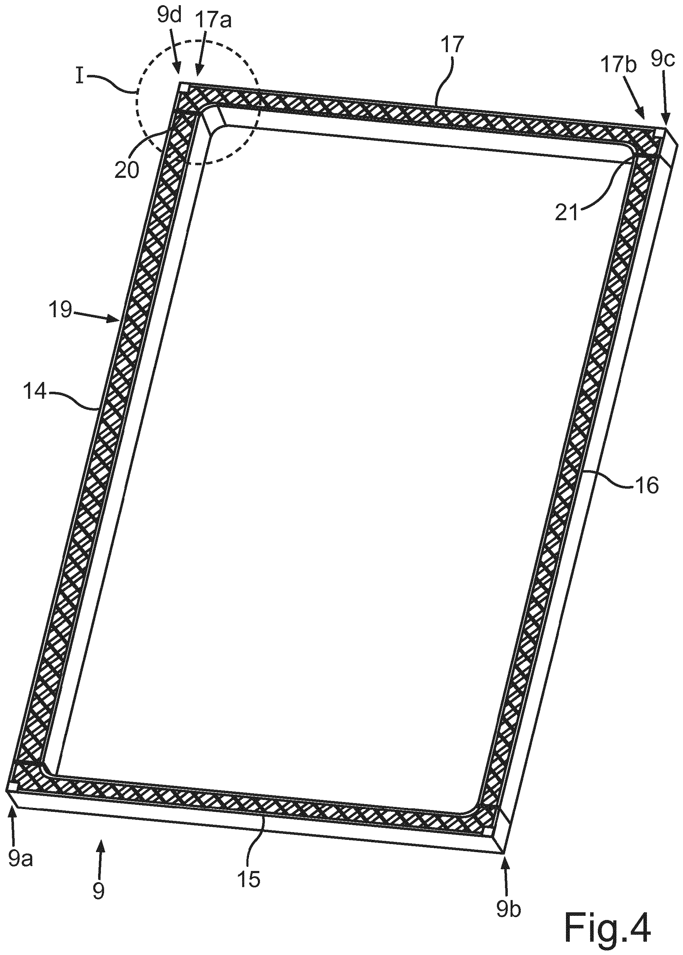

In Fig. 4 ist in einer perspektivischen Darstellung eine Ausführungsform des einstückigen Trägerrahmens 9 gemäß einer Betrachtung von einer ersten Seite her dargestellt. Wie zu erkennen ist, ist von dieser Betrachtungsseite her eine offenliegende Fachwerkstruktur 19 in den Trägerrahmenteilen 14 bis 17 ausgebildet.

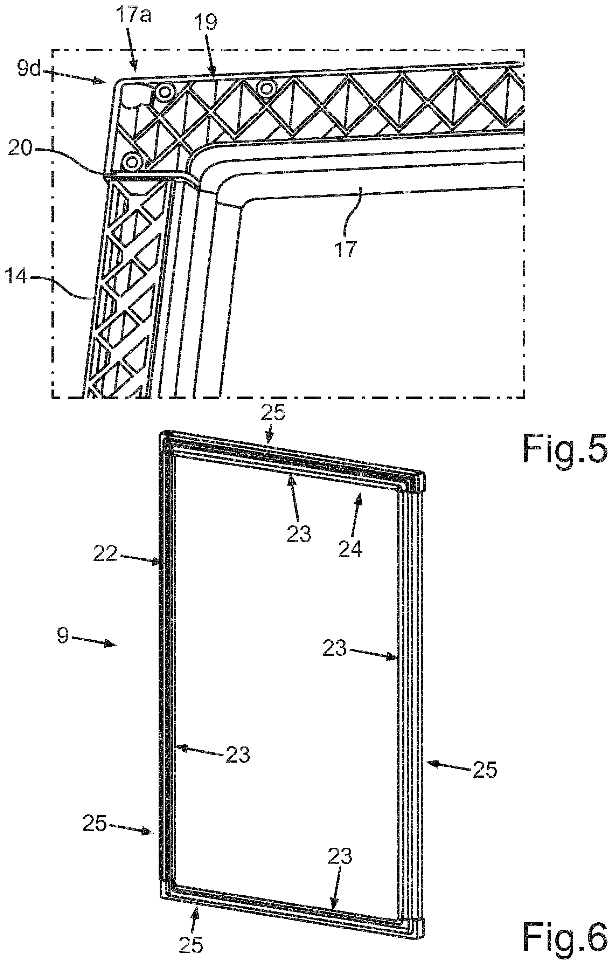

In Fig. 5 ist eine vergrößerte Darstellung eines Ausschnitts I in Fig. 4 gezeigt. Der Trägerrahmen 9 umfasst Eckbereiche 9a, 9b, 9c und 9d. Wie aus der Darstellung in Fig. 5 zu erkennen ist, ist die Fachwerkstruktur 19 über diese Eckbereiche 9a bis 9d des Trägerrahmens 9 hinweg innenliegend und unterbrechungsfrei ausgebildet. Dies bedeutet gemäß der Darstellung in Fig. 5, dass sich die Fachwerkstruktur 19 ohne Strukturveränderung des horizontalen oberen Trägerrahmenteils 17 über diesen Eckbereich 9d hinweg in die dann schon vertikale Seite des Trägerrahmens 9 hinein ausbildet. Wie aus der Darstellung in Fig. 5 zu erkennen ist, endet diese ununterbrochene Fachwerkstruktur 19 unterhalb des Eckbereichs 9d und daran anmündend gestaltet sich dann versetzt dazu die Fachwerkstruktur 19 des vertikalen Trägerrahmenteils 14.

Es ist somit vorgesehen, dass zumindest ein horizontal orientiertes Trägerrahmenteil 17 integral an gegenüberliegenden Enden 17a und 17b jeweils einen Eckbereich 9d bzw. 9c aufweist und die Fachwerkstruktur 19 in diesem horizontalen Trägerrahmenteil 17 über den jeweiligen Eckbereich 9d bzw. 9c hinweg ausgebildet ist. Das horizontale Trägerrahmenteil 17 ist zu vertikalen Trägerrahmenteilen 14 und 16 hin unterhalb den Eckbereichen 9c und 9d jeweils mit einer horizontalen Fachwerkabschlusswand 20 bzw. 21 ausgebildet. Dort gegenüber den Eckbereichen 9d bzw. 9c nach unten versetzt endet dann die in dem horizontalen Trägerrahmenteil 17 auch in diesen Eckbereichen 9d und 9c unterbrechungsfrei und somit ohne Änderung ausgebildete Fachwerkstruktur 19.

Entsprechend ist der Trägerrahmen 9 am unteren horizontalen Trägerrahmenteil 15 mit den Eckbereichen 9a und 9b ausgebildet.

In Fig. 6 ist in einer perspektivischen Darstellung der Trägerrahmen 9 von der in Fig. 4 gegenüberliegenden Seite gezeigt. Wie zu erkennen ist, ist dort die Fachwerkstruktur nicht zu erkennen und quasi abgedeckt.

Darüber hinaus ist vorgesehen, dass an einem Innenrand 23, der somit einen inneren Umfangsrand des Trägerrahmens 9 darstellt, eine Dichtung 24 ausgebildet ist. Die Dichtung 24 umfasst zumindest eine Dichtlippe. Mit diesem inneren Umfangsrand bzw. dem Innenrand 23 ist derjenige schmale Rand bezeichnet, den die Trägerrahmenteile 14 bis 17 auf den jeweils einander zugewandten Randseiten aufweisen. Demgegenüber weist der Trägerrahmen 9 auch einen äußeren Umfangsrand bzw. Außenrand 25 auf.

Vorzugsweise ist die Dichtung 24 zerstörungsfrei unlösbar an dem Innenrand 23 ausgebildet. Sie kann dazu beispielsweise angespritzt, insbesondere auch durch einen 2K-Spritzguss, oder durch Koextrusion oder durch Ankleben befestigt sein.

Es kann jedoch auch vorgesehen sein, dass diese Dichtung 24 zerstörungsfrei lösbar an dem Innenrand 23 angebracht ist, insbesondere beispielsweise eingesteckt oder eingerastet ist.

Vorteilhaft ist es, wenn die Dichtung 24 vollständig umlaufend und somit im Umlauf geschlossen an dem Innenrad 23 des Trägerrahmens 9 ausgebildet ist.

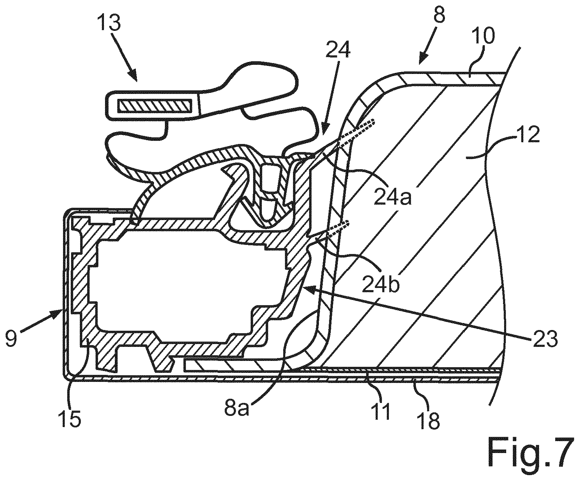

In Fig. 7 ist in einer Schnittdarstellung entlang der Schnittlinie VII-VII in Fig. 2 die Tür 5 in Teildarstellung gezeigt.

Wie dort zu erkennen ist, ist an dem Trägerrahmen 9 und dem in Fig. 7 gezeigten Trägerrahmenteil 15 an dem Innenrand 23 die Dichtung 24 angeordnet. Die Dichtung 24 umfasst im gezeigten Ausführungsbeispiel eine in Tiefenrichtung (z-Richtung) des Haushaltskältegeräts 1 betrachtet hintere Dichtlippe 24a und eine beabstandet dazu weiter vorne angeordnete weitere Dichtlippe 24b. Die beiden Dichtlippen 24a und 24b sind schräg zum Vakuumisolationselement 8 und nach hinten zum Innenraum 6 hin orientiert angeordnet, wenn die Tür 5 geschlossen ist.

Wie aus der Darstellung in Fig. 7 zu erkennen ist, ist die Dichtung 24 im Querschnitt U-förmig ausgebildet. Sie umfasst dazu die Dichtlippen 24a und 24b als die freien Schenkel der U-Form. Diese Dichtlippen 24a und 24b sind darüber hinaus frei kragend und hohlraumfrei ausgebildet. Sie liegen im montierten Zustand der Tür 5 an einem schmalen äußeren Umfangsrand 8a des Vakuumisolationskörpers bzw. des Vakuumisolationselements 8 an. Die beiden Dichtlippen 24a und 24b sind im Hinblick auf ihre Schrägorientierung quasi in die gleiche Richtung sich erstreckend angeordnet.

Vorzugsweise ist vorgesehen, dass die Tür 5 als so bezeichnete Vollvakuumtür ausgebildet ist. Dies bedeutet, dass neben dem Vakuumisolationselement 8 kein weiteres thermisch isolierendes Schaummaterial angeordnet ist, welches das Vakuumisolationselement 8 zumindest teilweise umgeben würde.

In den erläuterten Ausführungsbeispielen ist somit die Tür 5 als ein Ausführungsbeispiel einer erfindungsgemäßen Wandung oder einer vorteilhaften Ausgestaltung davon erläutert. Es kann auch vorgesehen sein, dass beispielweise eine der Wände 4a bis 4e entsprechend gestaltet ist. Derartiges kann zusätzlich oder anstatt dazu zur entsprechenden Ausgestaltung der Tür 5 vorgesehen sein.

Durch derartige Vollvakuumwandungen können diese sehr dünn gestaltet werden und die Vakuumisolationselemente 8 dennoch mit hoher thermischer Isolationswirkung bereitgestellt werden und montagetechnisch einfach gehalten und positionsfixiert werden.

Insbesondere stellt bei einer derartigen Wandung, vorzugsweise der Tür 5, dann die Rückseite 7 des Vakuumisolationskörpers 8 die nach innen sichtbare Wand der Tür 5 dar. Vorzugsweise ist somit diese Innenschale 10 der innere Abschluss der Tür 5, wobei diese Innenschale 10 aus einem thermisch verformten Kunststoff ausgebildet ist. Dieser weist vorzugsweise geringe Permeationswerte für Luft, Wasserdampf und andere Gase auf. Auch die Außenschale 11 ist insbesondere aus einem thermisch verformbaren Kunststoff mit geringen Permeationswerten für die oben genannten Medien ausgebildet oder sie ist aus einer Folie, die insbesondere auch metallisierte Schichten oder zumindest eine dünne Metallfolienschicht aufweist, ausgebildet. Diese Außenschale 11 ist vorzugsweise der Kontur der Abdeckung 18 angepasst.

Durch eine derartig dünnere Wandung kann entweder das Gerät 1 kleiner ausgestaltet werden oder das Nutzvolumen in dem Gerät 1 vergrößert werden. Da ein derartiges Nutzvolumen auch in die Berechnung der Energieeffizientklasse eines derartigen Haushaltskältegeräts 1 eingeht, ist auch dahingehend ein wesentlicher Vorteil erreicht. Nicht zuletzt ist durch einen derartigen Aufbau einer Wandung auch die Recyclefähigkeit des im Isolationskörper verwendeten Stützmaterials bzw. Füllmaterials gegeben. Da die Zugänglichkeit im Vergleich zu Ausführungen, bei denen ein derartiges Element aufgrund der anderweitigen fehlenden mechanischen Positionsfixierung durch einen weiteren Schaum befestigt und umgeben ist, schwieriger ist, ist durch eine derartige Wandung, wie sie in der vorliegenden Anmeldung angegeben ist, auch hier ein erhebliche Vorteil erzielt. Durch einen geringen Montage- bzw. Demontageaufwand ist der Isolationskörper mit wenigen Handgriffen entnehmbar und das enthaltene Stützmaterial kann einfach entnommen werden und für die weitere Verwendung aufbereitet werden. Durch den Trägerrahmen ist auch eine sehr einfache Auswechselbarkeit des Isolationskörpers als solchen möglich, da insbesondere auch eine zerstörungsfrei lösbare Verbindung zwischen dem Trägerrahmen und dem Isolationskörper ausgebildet sein kann.

### Bezugszeichenliste

- 1: Haushaltskältegerät
- 2: Gehäuse
- 3: Außengehäuse
- 4: Innengehäuse
- 4a, 4b: Seitliche Wandungen
- 4c: Hintere Wandung
- 4d: Bodenwandung
- 4e: Deckenwandung
- 5: Tür
- 6: Innenraum
- 7: Innenseite
- 8: Vakuumisolationselement
- 8a: Umfangsrand
- 9: Trägerrahmen
- 9a, 9b, 9c, 9d: Eckbereiche
- 10: Innenschale
- 11: Außenschale
- 12: Stützkörper
- 13: Dichtung
- 14, 15, 16, 17: Trägerrahmenteile
- 17a,17b: Enden
- 18: Abdeckung
- 19: Fachwerkstruktur
- 20, 21: Fachwerkabschlusswände
- 22: Nut
- 23: Innenrand
- 24: Dichtung
- 24a, 24b: Dichtlippen
- 25: Außenrand

## Patentansprüche

1. Wandung (5, 4a bis 4e) für ein Haushaltskältegerät (1), mit zumindest einem thermischen Isolationskörper (8), wobei der Isolationskörper (8) von einem Trägerrahmen (9) gehalten und umfangseitig umgeben ist und der Trägerrahmen (9) einstückig ausgebildet ist, **dadurch gekennzeichnet, dass** der Trägerrahmen (9) innenseitig zumindest bereichsweise eine Fachwerkstruktur (19) aufweist und die Fachwerkstruktur (19) über Eckbereiche (9a bis 9d) des Trägerrahmens (9) hinweg innen liegend und unterbrechungsfrei ausgebildet ist, so dass die Musterung des Fachwerks sich an diesen Übergängen im Eckbereich (9a bis 9d) im Vergleich zu Zonen fern des Eckbereichs (9a bis 9d) nicht ändert und somit im Wesentlichen gleichmäßig fortgesetzt ist.

2. Wandung (5, 4a bis 4e) nach Anspruch 1, **dadurch gekennzeichnet, dass** der Trägerrahmen (9) rechteckig ausgebildet ist.

3. Wandung (5, 4a bis 4e) nach Anspruch 1 oder 2, **dadurch gekennzeichnet, dass** der Trägerrahmen (9) aus Kunststoff ausgebildet ist.

4. Wandung (5, 4a bis 4e) nach Anspruch 3, **dadurch gekennzeichnet, dass** der Trägerrahmen (9) ein Spritzgussteil ist.

5. Wandung (5, 4a bis 4e) nach Anspruch 3 oder 4, **dadurch gekennzeichnet, dass** der Trägerrahmen (9) aus zumindest zwei unterschiedlichen Kunststoffmaterialien ausgebildet ist.

6. Wandung (5, 4a bis 4e) nach einem der vorhergehenden Ansprüche, **dadurch gekennzeichnet, dass** an dem Trägerrahmen (9) zumindest ein weiteres Funktionsbauteil angeordnet ist.

7. Wandung (5, 4a bis 4e) nach Anspruch 6, **dadurch gekennzeichnet, dass** ein Funktionsbauteil ein Scharnier und/oder eine Lagereinheit und/oder ein Versteifungsteil ist.

8. Wandung (5, 4a bis 4e) nach einem der vorhergehenden Ansprüche, **dadurch gekennzeichnet, dass** in zumindest einem Trägerrahmenteil (14 bis 17) des Trägerrahmens (9) ein Versteifungselement, insbesondere ein metallisches Versteifungselement, integriert ist, insbesondere innen liegend integriert ist.

9. Wandung (5, 4a bis 4e) nach einem der vorhergehenden Ansprüche, **dadurch gekennzeichnet, dass** zumindest ein horizontal orientiertes Trägerrahmenteil (15, 17) integral an gegenüberliegenden Enden (17a, 17b) jeweils einen Eckbereich (9a bis 9d) aufweist und die Fachwerkstruktur (19) in diesem horizontalen Trägerrahmenteil (15, 17) über den Eckbereich (9a bis 9d) hinweg ausgebildet ist, und das horizontale Trägerrahmenteil (15, 17) zu vertikalen Trägerrahmenteilen (14, 16) hin unter den Eckbereichen (9a bis 9d) eine horizontale Fachwerkabschlusswand (20, 21) aufweist, an welche eine Fachwerkstruktur (19) des vertikalen Trägerrahmenteils (14, 16) mündet.

10. Wandung (5, 4a bis 4e) nach einem der vorhergehenden Ansprüche, **dadurch gekennzeichnet, dass** auf einer Rahmenseite eine umlaufende Nut (22) ausgebildet ist, in welcher eine Dichtung (13) einsetzbar ist.

11. Wandung (5, 4a bis 4e) nach einem der vorhergehenden Ansprüche, **dadurch gekennzeichnet, dass** der Isolationskörper ein Vakuumisolationskörper (8) ist.

12. Wandung (5, 4a bis 4e) nach einem der vorhergehenden Ansprüche, **dadurch gekennzeichnet, dass** sie eine Tür (5), insbesondere eine Vollvakuumtür, für das Haushaltskältegerät (1) ist.

13. Haushaltskältegerät (1) mit zumindest einer Wandung (5, 4a bis 4e) nach einem der vorhergehenden Ansprüche.

## Claims

1. Wall (5, 4a to 4e) for a household refrigeration appliance (1), having at least one thermal insulation body (8), wherein the insulation body (8) is held by a support frame (9) and is surrounded circumferentially and the support frame (9) is integrally formed, **characterised in that** on the inside the support frame (9) has at least in some regions a lattice structure (19) and the lattice structure (19) is formed over corner regions (9a to 9d) of the support frame (9) internally and without interruption, such that the pattern of the lattice does not change at these transitions in the corner region (9a to 9d) in comparison with zones far from the corner region (9a to 9d) and thus is substantially continued regularly.

2. Wall (5, 4a to 4e) according to claim 1, **characterised in that** the support frame (9) is formed to be rectangular.

3. Wall (5, 4a to 4e) according to claim 1 or 2, **characterised in that** the support frame (9) is formed from plastic.

4. Wall (5, 4a to 4e) according to claim 3, **characterised in that** the support frame (9) is an injection moulded part.

5. Wall (5, 4a to 4e) according to claim 3 or 4, **characterised in that** the support frame (9) is formed from at least two different plastic materials.

6. Wall (5, 4a to 4e) according to one of the preceding claims, **characterised in that** at least one further functional component is arranged on the support frame (9).

7. Wall (5, 4a to 4e) according to claim 6, **characterised in that** a functional component is a hinge and/or a bearing unit and/or a reinforcing part.

8. Wall (5, 4a to 4e) according to one of the preceding claims, **characterised in that** in at least one support frame element (14 to 17) of the support frame (9), a reinforcing element, in particular a metal reinforcing element, is integrated, in particular is integrated internally.

9. Wall (5, 4a to 4e) according to one of the preceding claims, **characterised in that** at least one horizontally oriented support frame element (15, 17) has in each case a corner region (9a to 9d) integrally at opposite ends (17a, 17b) and the lattice structure (19) is formed over the corner region (9a to 9d) in said horizontal support frame element (15, 17), and the horizontal support frame element (15, 17) has a horizontal lattice wall (20, 21) cutting it off from vertical support frame elements (14, 16) under the corner regions (9a to 9d), into which horizontal lattice wall (20, 21) a lattice structure (19) of the vertical support frame element (14, 16) opens.

10. Wall (5, 4a to 4e) according to one of the preceding claims, **characterised in that** on one frame side a circumferential groove (22) is formed, in which a seal (13) can be inserted.

11. Wall (5, 4a to 4e) according to one of the preceding claims, **characterised in that** the insulation body is a vacuum insulation body (8).

12. Wall (5, 4a to 4e) according to one of the preceding claims, **characterised in that** it is a door (5), in particular a full vacuum door, for the household refrigeration appliance (1).

13. Household refrigeration appliance (1) having at least one wall (5, 4a to 4e) according to one of the preceding claims.

## Revendications

1. Paroi (5, 4a à 4e) pour un appareil frigorifique (1) à usage domestique, comprenant au moins un corps d'isolation (8) thermique, le corps d'isolation (8) étant maintenu et entouré côté périphérique par un cadre de support (9) et le cadre de support (9) étant réalisé d'une seule pièce, **caractérisée en ce que** le cadre de support (9) présente côté intérieur, au moins en partie, une structure en treillis (19) et **en ce que** la structure en treillis (19) est réalisée intérieurement et sans interruption au-delà de zones en coin (9a à 9d) du cadre de support (9), de sorte que le modèle du treillis ne se modifie pas à ces transitions dans la zone en coin (9a à 9d) en comparaison à des zones éloignées de la zone en coin (9a à 9d) et se poursuit ainsi essentiellement de manière régulière.

2. Paroi (5, 4a à 4e) selon la revendication 1, **caractérisée en ce que** le cadre de support (9) est réalisé de manière rectangulaire.

3. Paroi (5, 4a à 4e) selon la revendication 1 ou 2, **caractérisée en ce que** le cadre de support (9) est réalisé en matière plastique.

4. Paroi (5, 4a à 4e) selon la revendication 3, **caractérisée en ce que** le cadre de support (9) est une pièce moulée par injection.

5. Paroi (5, 4a à 4e) selon la revendication 3 ou 4, **caractérisée en ce que** le cadre de support (9) est réalisé à partir d'au moins deux matières plastiques différentes.

6. Paroi (5, 4a à 4e) selon l'une quelconque des revendications précédentes, **caractérisée en ce qu'**au moins un composant fonctionnel supplémentaire est disposé sur le cadre de support (9).

7. Paroi (5, 4a à 4e) selon la revendication 6, **caractérisée en ce qu'**un composant fonctionnel est une charnière et/ou une unité de logement et/ou une pièce de renforcement.

8. Paroi (5, 4a à 4e) selon l'une quelconque des revendications précédentes, **caractérisée en ce qu'**un élément de renforcement, notamment un élément de renforcement métallique est intégré, notamment intégré intérieurement, dans au moins une partie (14 à 17) du cadre de support (9).

9. Paroi (5, 4a à 4e) selon l'une quelconque des revendications précédentes, **caractérisée en ce qu'**au moins une partie (15, 17) du cadre de support, orientée horizontalement, présente respectivement une zone en coin (9a à 9d), intégralement à des extrémités opposées (17a, 17b), et **en ce que** la structure en treillis (19) est réalisée dans cette partie (15, 17) horizontale du cadre de support au-delà des zones en coin (9a à 9d), et **en ce que** la partie (15, 17) horizontale du cadre de support présente en direction de parties (14, 16) verticales du cadre de support, en dessous des zones en coin (9a à 9d), une paroi terminale (20, 21) horizontale de treillis sur laquelle aboutit une structure en treillis (19) de la partie (14, 16) horizontale du cadre de support.

10. Paroi (5, 4a à 4e) selon l'une quelconque des revendications précédentes, **caractérisée en ce qu'**une rainure (22) périphérique est réalisée sur un côté du cadre, dans laquelle un joint (13) est insérable.

11. Paroi (5, 4a à 4e) selon l'une quelconque des revendications précédentes, **caractérisée en ce que** le corps d'isolation est un corps d'isolation sous vide (8).

12. Paroi (5, 4a à 4e) selon l'une quelconque des revendications précédentes, **caractérisée en ce qu'**elle est une porte (5), notamment une porte à plein vide, pour l'appareil frigorifique (1) à usage domestique.

13. Appareil frigorifique (1) à usage domestique comprenant au moins une paroi (5, 4a à 4e) selon l'une quelconque des revendications précédentes.
